# DEMANDE DE BREVET EUROPEEN

(11) **EP 4 197 774 A1**
(43) Date de publication de la demande: **21.06.2023**
(21) Numéro de dépôt: 22214340.6
(22) Date de dépôt: 16.12.2022
(51) Int. Cl.: B32B 3/20, B32B 3/26, B32B 5/08, B32B 5/18, B32B 5/24, B32B 27/06, B32B 27/12, B32B 27/30, B32B 27/32, B32B 27/34, B32B 27/36

(54) **PANNEAU DE PROTECTION ACOUSTIQUE POUR VÉHICULE AUTOMOBILE**

(30) Priorité: 20.12.2021 FR 2114022
(71) Demandeur: TREVES PRODUCTS, SERVICES & INNOVATION, 75008 Paris (FR)
(72) Inventeur: LEMAIRE, Dominique, 75008 Paris (FR); DUVAL, Arnaud, 75008 Paris (FR); CRIGNON, Guillaume, 75008 Paris (FR)
(74) Mandataire: Sayettat, Julien Christian

(57) **Abrégé**

L'invention concerne un panneau (1) de protection acoustique pour véhicule automobile, ledit panneau comprenant, disposés successivement l'un sur l'autre une couche poreuse (2) d'absorption acoustique conformable à chaud, un film (3) thermoplastique d'étanchéité et une couche de ressort (4) élastiquement compressible, ledit panneau comprenant en outre une couche granulaire (5) poreuse, à base de broyat de matériau thermofusible, ladite couche granulaire étant associée entre ladite couche poreuse et ledit film, ladite couche poreuse présentant un module de Young en compression supérieur à 1 MPa, de manière à assurer en outre une fonction de rigidification.

## Description

L'invention concerne un panneau de protection acoustique pour véhicule automobile et un procédé de réalisation d'un tel panneau.

Il est connu de réaliser un panneau de protection acoustique pour véhicule automobile, ledit panneau comprenant, disposés successivement l'un sur l'autre :
- une couche poreuse d'absorption acoustique conformable à chaud,
- un film thermoplastique d'étanchéité,
- une couche de ressort élastiquement compressible,
de sorte que ledit panneau permette une isolation acoustique selon un principe « masse/ressort », la masse étant formée par ladite couche poreuse associée audit film et le ressort par ladite couche de ressort, ledit panneau présentant en outre des propriétés d'absorption acoustique apportées par ladite couche poreuse.

Quand il est dit que la couche poreuse est conformable à chaud, on entend qu'elle peut adopter une géométrie appropriée une fois chauffée à une température suffisante et conformée dans un moule.

De par les caractéristiques d'isolation et d'absorption apportées par ce type de panneau, les applications potentielles sont notamment la réalisation de panneaux de tablier du côté habitacle ou moteur, de sous tapis d'habitacle ou encore de compartiment à bagages.

Dans la mesure où le film présente une masse surfacique très faible, il s'avère nécessaire de conférer à la couche poreuse une masse surfacique élevée afin d'optimiser les performances en isolation acoustique.

Mais on est souvent conditionné par le fait que la couche poreuse doit avoir une épaisseur minimisée, ce qui oblige à la surcomprimer, et donc à la sur-densifier.

Il en résulte que la porosité de la couche poreuse est amoindrie, et sa résistance au passage de l'air augmentée de façon drastique, ce qui est néfaste quant à ses propriétés d'absorption acoustique.

Face à ces inconvénients, l'invention a notamment pour but de proposer un panneau permettant de préserver/améliorer l'isolation acoustique, et ceci sans nuire à ses propriétés d'absorption acoustique et sans générer de surépaisseur notable.

A cet effet, et selon un premier aspect, l'invention propose un panneau de protection acoustique pour véhicule automobile, ledit panneau comprenant, disposés successivement l'un sur l'autre :
- une couche poreuse d'absorption acoustique conformable à chaud,
- un film thermoplastique d'étanchéité,
- une couche de ressort élastiquement compressible,
ledit panneau présentant en outre les caractéristiques suivantes :
- il comprend en outre une couche granulaire poreuse, à base de broyat de matériau thermofusible, ladite couche granulaire étant associée entre ladite couche poreuse et ledit film,
- ladite couche poreuse présente un module de Young en compression supérieur à 1 MPa, de manière à assurer en outre une fonction de rigidification.

Avec un tel agencement, la masse du système « masse/ressort » est formée par l'empilement film/couche granulaire/couche poreuse.

L'agencement proposé permet notamment :
- d'alourdir la masse ajoutée au-dessus de la couche de ressort, et ceci sans nuire aux propriétés d'absorption apportées par la couche poreuse et sans impact notoire sur l'augmentation d'épaisseur du panneau dans la mesure où le matériau constitutif du broyat est choisi suffisamment dense, la surépaisseur étant uniquement apportée par la couche granulaire,
- de pouvoir déposer si besoin une très faible masse surfacique de broyât, ceci du fait sa nature granulaire qui autorise notamment un saupoudrage léger ; en outre, il est possible, comme on le verra plus loin, de prévoir pour la couche granulaire des zones de masse surfacique différenciée obtenues par saupoudrage différencié,
- de conférer à la couche granulaire un comportement analogue à celui d'une couche étanche non granulaire, ladite couche granulaire se comportant comme une couche étanche grâce à la raideur importante conférée à la couche poreuse qui génère avec le film un effet de « prise de masse » du multicouches disposé au-dessus de la couche de ressort,
- d'obtenir, de par le caractère thermofusible de la couche granulaire, par chauffage de ladite couche lors de la fabrication du panneau, la cohésion entre ladite couche granulaire et la couche poreuse et entre ladite couche granulaire et le film, ce qui est essentiel pour assurer une bonne isolation acoustique,
- de prévoir une couche poreuse de masse surfacique modérée, ce qui permet de raccourcir son temps de chauffage avant sa conformation et aussi d'éviter sa saturation en résistance au passage de l'air,
- d'utiliser un broyat à base de matériau recyclé, ce qui est favorable pour l'environnement.

Selon un deuxième aspect, l'invention propose un procédé de réalisation d'un tel élément.

D'autres particularités et avantages de l'invention apparaîtront dans la description qui suit, faite en référence aux figures jointes, dans lesquelles :
[Fig.1] est une vue schématique en coupe partielle d'un panneau selon une réalisation,
[Fig.2] est une présentation du coefficient d'absorption acoustique d'un panneau en fonction de la fréquence (en Hz), pour :
   ∘ un panneau de référence (courbe 1) : couche de ressort souple de masse volumique égale à 65 kg/m³ et d'épaisseur égale à 17 mm ; film de masse surfacique égale à 80 g/m²; feutre comprimé de masse surfacique égale à 3000 g/m² et d'épaisseur égale à 8 mm,
   ∘ un panneau selon une réalisation de l'invention (courbe 2) : couche de ressort souple de masse volumique égale à 65 kg/m³ et d'épaisseur égale à 16 mm ; film de masse surfacique égale à 80 g/m² ; couche granulaire de masse surfacique égale à 1500 g/m² et d'épaisseur égale à 1 mm ; feutre comprimé de masse surfacique égale à 1500 g/m² et d'épaisseur égale à 8 mm,

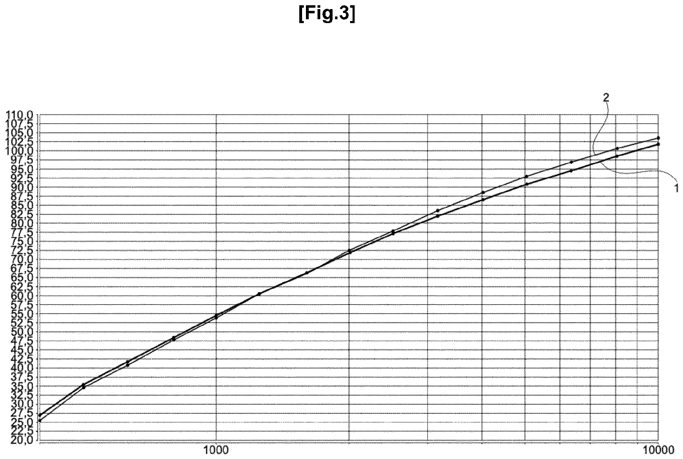

[Fig.3] est une présentation de l'indice d'affaiblissement acoustique (ou « transmission loss », en dB) d'un panneau en fonction de la fréquence (en Hz), pour le panneau de référence (courbe 1) et le panneau selon l'invention (courbe 2) sus décrits.

On décrit à présent, en référence aux figures, un panneau 1 de protection acoustique pour véhicule automobile, ledit panneau comprenant, disposés successivement l'un sur l'autre :
- une couche poreuse 2 d'absorption acoustique conformable à chaud,
- un film 3 thermoplastique d'étanchéité,
- une couche de ressort 4 élastiquement compressible,
ledit panneau présentant en outre les caractéristiques suivantes :
- il comprend en outre une couche granulaire 5 poreuse, à base de broyat de matériau thermofusible, ladite couche granulaire étant associée entre ladite couche poreuse et ledit film,
- ladite couche poreuse présente un module de Young en compression supérieur à 1 MPa, de manière à assurer en outre une fonction de rigidification.

Selon une réalisation, la couche poreuse 2 présente un module de Young en compression compris entre 10 et 100 MPa permettant de garantir le comportement « masse-ressort » sans résonance sur la totalité du spectre de fréquences jusqu'à 10 kHz, ceci typiquement pour une épaisseur de ladite couche comprise entre 3 et 10 mm.

Selon une réalisation, le matériau du broyat présente un module de Young en compression compris entre 100 et 800 MPa, ce qui permet de limiter les phénomènes de résonance de la couche poreuse 2 dans le spectre de fréquences jusqu'à 10 kHz.

Selon une réalisation, la couche de ressort 4 est fixée sur le film 3, par exemple par collage ou du fait d'un surmoulage dudit film par ladite couche.

Selon une autre réalisation, il n'y a pas de liaison entre la couche de ressort 4 et le film 3, l'ensemble couche poreuse 2/couche granulaire 5 /film 3 étant posé sur ladite couche de ressort.

Selon une réalisation, la couche poreuse 2 présente une résistance au passage de l'air inférieure à 3000 N.s.m⁻³.

Selon une réalisation, la couche poreuse 2 est à base de matériau fibreux de masse surfacique supérieure à 600 g/m², et notamment comprise entre 1200 et 1500 g/m².

En particulier, le matériau fibreux est à base de fibres de structure - par exemple de polyester - liées entre elles par un agent de liaison - par exemple formé par des fibres de liaison bi-composant comprenant une âme, fusible à haute température, et une gaine fusible à température moindre, ladite âme étant notamment à base de polyester et ladite gaine à base de polyester modifié.

Selon une autre réalisation, la couche poreuse 2 est à base de flocons de mousse élastiquement compressible - notamment de polyuréthanne - et de fibres de liaison bi-composant comprenant une âme, fusible à haute température, et une gaine fusible à température moindre - ladite âme étant notamment à base de polyester et ladite gaine à base de polyester modifié -, lesdites fibres occupant entre 10 et 30% en masse de ladite couche et lesdits flocons entre 90 et 70%.

Selon une réalisation, la couche poreuse 2 à base de flocons de mousse et de fibres de liaison présente une masse surfacique comprise entre 1200 et 1500 g/m².

Selon une réalisation, la couche granulaire 5 présente une porosité - c'est à dire un taux de vide par rapport au volume global - comprise entre 5 et 20%.

Selon une réalisation, le matériau constitutif de la couche granulaire 5 présente une masse volumique comprise entre 1500 et 2500 kg/m³.

Selon une réalisation, la couche granulaire 5 présente une masse surfacique comprise entre 500 et 3000 g/m².

Selon une réalisation, la couche granulaire 5 est à base de matériau recyclé.

Selon divers modes de réalisation, la couche granulaire 5 est au choix à base de :
- broyat de tapis automobile recyclé, ledit broyat comprenant des particules de matériau élastomère thermoplastique - par exemple d'éthylène propylène diène monomère - chargé avec une charge minérale - par exemple de la baryte - et des fibres - par exemple de polyester -,
- ou de polyvinyl butyral (PVB).

Une utilisation classique du PVB consiste à l'interposer en film entre deux couches de verre, notamment pour réaliser des pares-brise de véhicules automobiles ou des vitres d'immeubles.

Une caractéristique de cette matière est son élasticité très importante qui permet de retenir le verre cassé et qui évite aux couches de verre de voler en éclats lors d'un choc.

Une telle élasticité permet d'envisager son thermoformage avec de forts étirements et sans ruptures.

En outre, le PVB présente la particularité d'avoir une densité de l'ordre de 1,1, bien supérieure à celle des broyats classiquement utilisés, ce qui permet de disposer d'une couche granulaire 5 de moindre volume, et donc d'optimiser le volume disponible par ailleurs dans le véhicule.

Enfin, du fait de son caractère fortement collant, le PVB présente une très forte adhésion avec le film 3 et la couche poreuse 2.

Selon une réalisation, la taille des particules de matériau granulaire est comprise entre 1 et 6 mm.

Selon diverses réalisations, le film 3 est à base de polyamide et/ou de polyester, de manière à ne pas fondre lors de la conformation à chaud du panneau 1.

Selon une réalisation, le film 3 est composé de plusieurs couches de différents matériaux thermoplastiques, étant par exemple constitué d'une couche de polyamide prise entre deux couches de polyéthylène.

Selon une réalisation, le film 3 présente une épaisseur comprise entre 25 et 150 microns.

Selon diverses réalisations, la couche de ressort 4 est au choix à base :
- de matériau fibreux, présentant notamment une masse surfacique comprise entre 600 et 1800 g/m²,
- ou de mousse moulée - notamment de polyuréthanne - surmoulant le film 3, présentant notamment une masse volumique comprise entre 40 et 80 kg/m³,
- ou de flocons de mousse - notamment de polyuréthanne - élastiquement compressible et de fibres de liaison bi-composant comprenant une âme, fusible à haute température, et une gaine fusible à température moindre, lesdites fibres occupant entre 10 et 30% en masse de ladite couche et lesdits flocons entre 90 et 70%, l'ensemble présentant notamment une masse surfacique comprise entre 600 et 1800 g/m².

Selon une réalisation, la couche de ressort 4 présente un module de Young en compression compris entre 5 et 90 KPa.

Selon une réalisation, dans le cas d'une couche de ressort 4 à base de flocons de mousse liés par des fibres bi-composant, on peut prévoir que ladite couche soit issue d'un moulage permettant de lui conférer une géométrie tridimensionnelle à densité maîtrisée.

Selon diverses réalisations, le panneau 1 présente une zone lourde 6 où la couche granulaire 5 présente une masse surfacique élevée, de manière à réaliser une forte isolation acoustique, et une zone allégée 7, de moindre isolation acoustique, présentant au choix l'une ou l'autre des caractéristiques suivantes :
- ladite couche granulaire est amincie, selon la réalisation représentée, de manière à présenter une masse surfacique moindre,
- ladite couche granulaire est supprimée, selon une variante non représentée, la couche poreuse 2 étant directement associée au film 3 d'étanchéité.

Comme on le verra plus loin, la couche granulaire 5 peut être déposée par saupoudrage.

Sachant que le panneau 1 est généralement disposé en regard d'une surface hétérogène en émission sonore, il est nécessaire, afin d'assurer une protection acoustique adéquate, de déposer une quantité de broyat prenant en compte la portion de surface la plus émissive.

Il en résulte l'obtention d'un panneau 1 de masse importante contribuant à alourdir le véhicule, ce qui est préjudiciable en matière de consommation de carburant.

C'est pourquoi il est pertinent d'envisager un saupoudrage différencié du broyat pour réaliser le juste nécessaire en isolation et alléger le panneau 1.

On décrit enfin un procédé de réalisation d'un tel panneau 1, ledit procédé comprenant les étapes suivantes :
- prévoir un broyât, notamment issu du recyclage,
- prévoir une couche poreuse 2 et un film 3 thermoplastique,
- déposer ledit broyat par saupoudrage entre ladite couche poreuse et ledit film, ladite couche et ledit film étant notamment sous forme de rouleaux actionnés en déroulement continu ou bien sous forme de plaques,
- calandrer l'ensemble avec ledit broyat porté à température de ramollissement de manière à réaliser un complexe,
- conformer à chaud dans un moule refroidi une plaque dudit complexe à la géométrie du panneau 1 à obtenir,
- associer une couche de ressort 4 à ladite plaque une fois conformée.

Selon diverses réalisations, l'association de la couche de ressort 4 à la plaque de complexe peut être réalisée :
- soit pendant l'étape de conformation à chaud, ladite couche de ressort étant superposée sur le film 3 lors de ladite étape,
- soit dans une étape différée, notamment par collage, ou encore par surmoulage quand ladite couche de ressort est à base de mousse moulée.

Dans le cas d'une association différée et d'une couche de ressort 4 surmoulée, on peut prévoir de conformer à chaud la plaque selon une géométrie tridimensionnelle avant son surmoulage.

Selon une réalisation, le broyat est déposé de façon différenciée, comme explicité plus haut, de manière à réaliser un panneau 1 pourvu d'une zone lourde 6, de forte isolation acoustique, et d'une zone allégée 7, de moindre isolation acoustique.

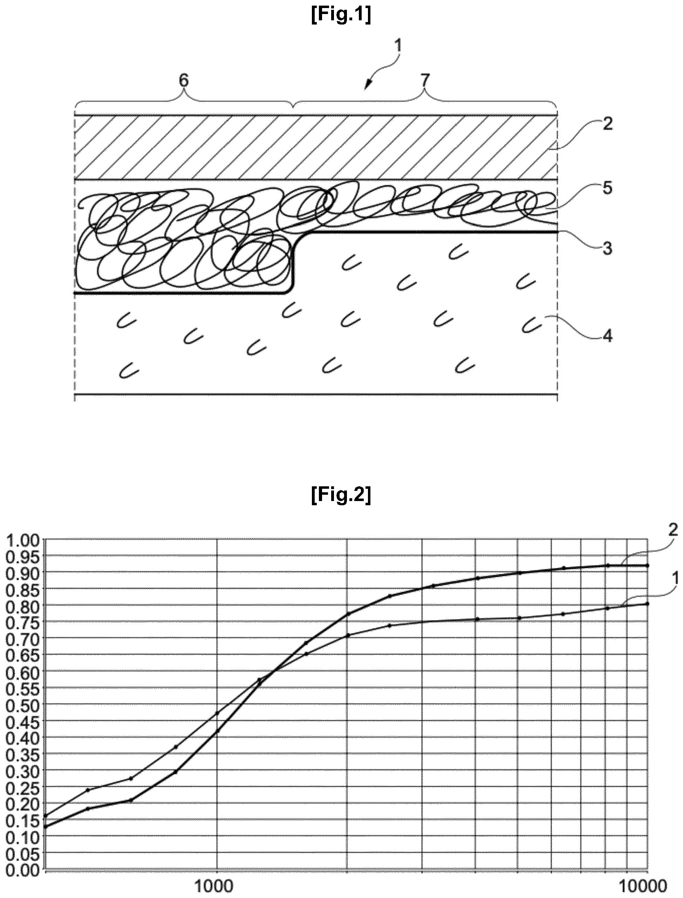

On commente à présent les courbes des figures 2 et 3.

On observe, sur la figure 3, que les performances d'isolation d'un panneau selon l'invention sont très analogues à celles d'un panneau de référence dont le complexe (couche poreuse/film) disposé au-dessus de la couche de ressort présente la même masse surfacique totale de 3000 g/m².

En revanche, on observe, sur la figure 2, que les propriétés d'absorption en champ diffus (pour un échantillon plan de 1,2 m²) d'un panneau selon l'invention sont très supérieures à celles du panneau de référence sus évoqué au-delà de 1000 Hz environ (amélioration de 10 à 15%), sachant toutefois que la saturation de la résistance au passage de l'air liée à la surcompression de la couche poreuse dans le panneau de référence a un léger effet bénéfique (de l'ordre de 5%) en moyennes fréquences (400-1000 Hz).

## Revendications

1. Panneau (1) de protection acoustique pour véhicule automobile, ledit panneau comprenant, disposés successivement l'un sur l'autre :
• une couche poreuse (2) d'absorption acoustique conformable à chaud,
• un film (3) thermoplastique d'étanchéité,
• une couche de ressort (4) élastiquement compressible,
ledit panneau étant **caractérisé en ce que** :
• il comprend en outre une couche granulaire (5) poreuse, à base de broyat de matériau thermofusible, ladite couche granulaire étant associée entre ladite couche poreuse et ledit film,
• ladite couche poreuse présente un module de Young en compression supérieur à 1 MPa, de manière à assurer en outre une fonction de rigidification.

2. Panneau selon la revendication 1, **caractérisé en ce que** la couche poreuse (2) présente un module de Young en compression compris entre 10 et 100 MPa.

3. Panneau selon l'une des revendications précédentes, **caractérisé en ce que** le matériau du broyat présente un module de Young en compression compris entre 100 et 800 MPa.

4. Panneau selon l'une quelconque des revendications 1 à 3, **caractérisé en ce que** la couche poreuse (2) présente une résistance au passage de l'air inférieure à 3000 N.s.m⁻³.

5. Panneau selon l'une quelconque des revendications 1 à 4, **caractérisé en ce que** la couche poreuse (2) est à base de matériau fibreux de masse surfacique supérieure à 600 g/m².

6. Panneau selon l'une quelconque des revendications 1 à 4, **caractérisé en ce que** la couche poreuse (2) est à base de flocons de mousse élastiquement compressible et de fibres de liaison bi-composant comprenant une âme, fusible à haute température, et une gaine fusible à température moindre, lesdites fibres occupant entre 10 et 30% en masse de ladite couche et lesdits flocons entre 90 et 70%.

7. Panneau selon l'une quelconque des revendications précédentes, **caractérisé en ce que** le matériau constitutif de la couche granulaire (5) présente une masse volumique comprise entre 1500 et 2500 kg/m³.

8. Panneau selon l'une quelconque des revendications précédentes, **caractérisé en ce que** la couche granulaire (5) est au choix à base de :
• broyat de tapis automobile recyclé, ledit broyat comprenant des particules de matériau élastomère thermoplastique chargé avec une charge minérale et des fibres,
• ou de polyvinyl butyral.

9. Panneau selon l'une quelconque des revendications précédentes, **caractérisé en ce que** la couche de ressort (4) est au choix à base :
• de matériau fibreux,
• ou de mousse moulée surmoulant le film (3),
• ou de flocons de mousse élastiquement compressible et de fibres de liaison bi-composant comprenant une âme, fusible à haute température, et une gaine fusible à température moindre, lesdites fibres occupant entre 10 et 30% en masse de ladite couche et lesdits flocons entre 90 et 70%.

10. Panneau selon l'une quelconque des revendications précédentes, **caractérisé en ce qu'**il présente une zone lourde (6) où la couche granulaire (5) présente une masse surfacique élevée et une zone allégée (7) présentant au choix l'une ou l'autre des caractéristiques suivantes :
• ladite couche granulaire est amincie de manière à présenter une masse surfacique moindre,
• ladite couche granulaire est supprimée, la couche poreuse (2) étant directement associée au film (3) d'étanchéité.

11. Procédé de réalisation d'un panneau (1) selon l'une quelconque des revendications précédentes, **caractérisé en ce qu'**il comprend les étapes suivantes :
• prévoir un broyât,
• prévoir une couche poreuse (2) et un film (3) thermoplastique,
• déposer ledit broyat par saupoudrage entre ladite couche poreuse et ledit film, ladite couche et ledit film étant sous forme de rouleaux actionnés en déroulement continu ou sous forme de plaques,
• calandrer l'ensemble avec ledit broyat porté à température de ramollissement de manière à réaliser un complexe,
• conformer à chaud dans un moule refroidi une plaque dudit complexe à la géométrie du panneau (1) à obtenir,
• associer une couche de ressort (4) à ladite plaque une fois conformée.
